# EUROPÄISCHE PATENTSCHRIFT

(11) **EP 3 164 666 B1**
(45) Veröffentlichungstag und Bekanntmachung des Hinweises auf die Patenterteilung: **15.08.2018**
(21) Anmeldenummer: 15733405.3
(22) Anmeldetag: 25.06.2015
(51) Int. Cl.: F16C 32/06, G01B 5/008

(54) **KOORDINATENMESSGERÄT**
COORDINATE MEASURING DEVICE
APPAREIL DE MESURE DE COORDONNÉES

(30) Priorität: 01.07.2014 DE 102014212748
(43) Veröffentlichungstag der Anmeldung: 10.05.2017
(73) Patentinhaber: Carl Zeiss Industrielle Messtechnik GmbH, 73447 Oberkochen (DE)
(72) Erfinder: JACOBS, Oliver, 89551 Königsbronn (DE)
(74) Vertreter: Carl Zeiss AG - Patentabteilung
(86) Internationale Anmeldenummer: PCT/EP2015/064343
(87) Internationale Veröffentlichungsnummer: WO 2016/001050

(56) Entgegenhaltungen:
- EP-A2- 0 133 853
- DE-A1- 3 441 426
- DE-A1-102007 051 395
- DE-A1-102007 057 849
- DE-B3- 10 229 705
- DE-B3- 10 332 001
- JP-A- 2003 097 938
- US-A- 4 415 148
- US-A- 4 964 221
- US-A1- 2004 155 543

## Beschreibung

Die Erfindung betrifft ein Koordinatenmessgerät mit zumindest einem Messschlitten, über den ein Sensor zum Abtasten der Oberfläche eines Werkstückes relativ zu einem auf einer Werkstückauflage aufliegenden Werkstück in zumindest einer Koordinatenrichtung verschiebbar gelagert ist, wobei der Messschlitten dazu über eine Fluidlagerführung relativ zu einer den Messschlitten lagernden Komponente beweglich in der Koordinatenrichtung geführt ist, und wobei diese Fluidlagerführung eine ebene Führung und ein mit der Führung zusammenwirkendes Fluiddrucklager umfasst, wobei das Fluiddrucklager Bestandteil einer Lagerbaugruppe ist, die neben dem Fluiddrucklager zusätzlich eine Federung mit zwei relativ zueinander gefederten Bereichen umfasst, wobei an einem ersten Bereich das Fluiddrucklager befestigt ist und wobei deren zweiter Bereich an einem Lagergrundkörper befestigt ist und wobei entweder der Lagergrundkörper an der lagernden Komponente angeordnet ist und die ebene Führung am Messschlitten angeordnet ist oder der Lagergrundkörper am Messschlitten angeordnet ist und die ebene Führung an der lagernden Komponente angeordnet ist. Die Federung ist hierbei eine Gasdruckfeder.

Die Druckschrift DE 34 41 426 A1 zeigt ein solches Koordinatenmessgerät mit sämtlichen Merkmalen eines Koordinatenmessgerätes der eingangs genannten Art. Das hierin gezeigte Koordinatenmessgerät ist vom sogenannten Portaltyp mit mehreren relativ zueinander verschieblichen Messschlitten mit einem in horizontaler Richtung verschieblich gelagerten ersten Messschlitten in Form eines Portals, einem zweiten Messschlitten, der ebenfalls horizontal entlang der Traverse des Portals (erster Messschlitten) verschieblich gelagert ist und einem dritten Messschlitten in Form einer Pinole, die in vertikaler Richtung am zweiten Messschlitten beweglich gelagert ist. Am unteren Ende des dritten Messschlittens (Pinole) ist ein Tastsystem befestigt. Der erste Messschlitten (Portal) ist über Fluiddrucklager in Form von Luftdrucklagern (in der Druckschrift als aerostatische Luftlager bezeichnet) entlang einer Basis (in der Druckschrift als Sockel bezeichnet) verschieblich gelagert. Auf der Basis ist ein Werkstück angeordnet. Das hierbei verwendete Luftdrucklager gemäß Figur 2 dieser Druckschrift bildet durch eingeblasene Druckluft einen Arbeitsspalt mit der Oberfläche der Basis. Das Luftdrucklager befindet sich auf einer Gasdruckfeder, die wie folgt aufgebaut ist. Durch eine am unteren Ende des ersten Messschlittens befindliche Fläche (Portalstützfläche) und einen als elastisches Element ausgebildeten profilierten Ansatz wird ein geschlossener Hohlraum begrenzt, der ebenfalls mit Druckluft gefüllt ist. Dieser mit Druckluft gefüllte Hohlraum ist spaltförmig und kann eine Höhe zwischen 0,005mm und 0,01 mm annehmen. Eine weitere Vergrößerung dieses Luftspaltes wird durch den elastisch verformbaren Ansatz verhindert.

In Figur 7 dieser Druckschrift ist eine zur Ausführungsform nach Figur 2 dieser Druckschrift alternative Ausführungsform des Luftdrucklagers mit Gasdruckfeder gezeigt. Hierin sind die Gasdruckfeder und das hiervon getragene Luftdrucklager als ein vom ersten Messschlitten (Portal) separates Bauteil ausgeführt, das über ein sphärisches Gelenk an der am unteren Ende des ersten Messschlittens befindliche Fläche (Portalstützfläche) gelagert ist. Ansonsten funktioniert diese Gasdruckfeder und das Luftdrucklager vollkommen analog zur Ausführungsform nach Figur 2 dieser Druckschrift.

Ein anderes Koordinatenmessgerät der eingangs genannten Art, das allerdings keine Gasdruckfeder aufweist, ist beispielsweise aus der europäischen Patentanmeldung EP 10 79 123 A2 bekannt. Hierin ist eine lineare Fluidlagerführung eines Koordinatenmessgerätes gezeigt, wobei diese Fluidlagerführung eine ebene Führung in Form eines im Querschnitt rechteckigen Profiles aufweist, deren vier Außenseiten jeweils als Führung ausgebildet sind. Das im Querschnitt rechteckige Profil dient hier also als Führungskörper. Mit diesen ebenen Führungen des Führungskörpers wirken eine Vielzahl von Fluiddrucklagern zusammen, die jeweils an einem Lagergrundkörper angeordnet sind. Der Lagergrundkörper ist hierbei im Profil ebenfalls ein
rechteckiger Rahmen, der den Führungskörper mit den hierauf angeordneten Führungen umschließt, wobei an den vier Innenseiten des Lagergrundkörpers jeweils die besagten Fluiddrucklager angeordnet sind, die auf den ebenen Führungen des Führungskörpers aufliegen. Die Fluiddrucklager von zwei jeweils aneinander angrenzenden Seiten der vier Seiten liegen hierbei jeweils am Lagergrundkörper an. Die Fluiddrucklager der restlichen beiden Seiten sind hingegen über eine Feder am Lagergrundkörper befestigt. Insoweit handelt es sich bei den letztgenannten Baugruppen um eine Lagerbaugruppe für eine lineare Fluidlagerführung eines Koordin-atenmessgerätes, umfassend ein Fluiddrucklager und eine Federung mit zwei relativ zueinander gefederten Bereichen wobei an einem ersten Bereich das Fluiddrucklager befestigt ist und deren zweiter Bereich dazu eingerichtet ist, an einem Lagergrundkörper befestigt zu werden.

Die letztgenannten Fluiddrucklager sind alleine deshalb über eine Federung am Lagergrundkörper befestigt, damit einerseits die Fluiddrucklager und die den jeweiligen Fluiddrucklager gegenüberliegenden Fluiddrucklager mit einer definierten Anfederkraft gegen die jeweilige ebene Führung gepresst werden. Andererseits erlaubt eine derartige federnde Befestigung auch, dass Parallelitätsfehler in den ebenen Führungen ausgeglichen werden können. Die Verwendung von derartigen Lagerbaugruppen, wie sie eben beschrieben wurden, hat den besonderen Vorteil, dass eine derartige Lagerbaugruppe relativ einfach herzustellen ist. Allerdings ist mit derartigen Lagerbaugruppen auch ein Nachteil verbunden. Um eine möglichst hohe Lagersteifigkeit zu erreichen sollten Fluiddrucklager möglichst exakt in einem definierten Arbeitspunkt betrieben werden. Eine Kurve, die den Zusammenhang zwischen dem Luftspalt und der auf das Fluiddrucklager wirkenden Belastung darstellt, verläuft in diesem Arbeitspunkt am flachsten. Das bedeutet, dass eine Änderung der Belastung in diesem Arbeitspunkt nur zu einer geringfügigen Änderung des Luftspaltes führt. Wechsellasten, die beispielsweise durch Beschleunigungen hervorgerufen werden, wirken sich damit nur sehr gering auf den Lagerspalt aus. Das erfordert, dass das Fluiddrucklager mit einer definierten Anfederkraft gegen die Führung gepresst wird. Ist die Anfederkraft zu klein, so wird der Lagerspalt zu groß. Gerade Fluiddrucklager, die als Fluid ein Gas (wie beispielsweise Luft) verwenden, neigen bei zu großen Lagerspalten dazu, dass das Fluiddrucklager zu schwingen anfängt. Ist die Anfederkraft hingegen zu groß, wird der Lagerspalt so klein, dass beispielsweise schon relativ kleine Partikel auf der Führung oder dynamische Wechsellasten zu einem Aufsitzen des Fluiddrucklagers auf der Führung führen können. Andererseits gibt es aber eine Vielzahl von Faktoren, die eine Veränderung der Anfederkraft erfordern. Beispielsweise führen fertigungsbedingte Unterschiede in der Oberflächenbeschaffenheit der Führung dazu, dass abhängig von der jeweiligen Position unterschiedliche Anfederkräfte erforderlich sind. Oberflächen mit einem hohen Traganteil (hoher Traganteil bedeutet, dass Rauhigkeitsspitzen durch Läppen abgetragen wurden) führen dazu, dass bei gleicher Federkraft ein größerer Lagerspalt entsteht. Des Weiteren führen auch fertigungsbedingte Parallelitätsfehler der Führungen zu unterschiedlichen Anfederkräften. Ist beispielsweise der Abstand von zwei Parallelen Führungen zu gering, so führt das dazu, dass die Federspannung der Federung und damit die Anfederkraft abnimmt. Des Weiteren führen auch Fertigungstoleranzen der Federn oder anderer Bauteile, wie des Fluiddrucklagers, zu unterschiedlichen Anfederkräften. Um daher einen geeigneten Lagerspalt zu erzielen, gibt es Federungen, bei denen die Anfederkräfte eingestellt werden können. Eine Justierung der Anfederkraft gestaltet sich jedoch oftmals sehr schwierig und langwierig. Es gibt auch Federungen, die überhaupt nicht justiert werden können.

Das Gebrauchsmuster DE 94 19 794 U1 zeigt eine Gasdruckfeder, die dafür eingesetzt wird, um hierüber die Basis eines Koordinatenmessgerätes gegenüber dem darunterliegenden Boden schwingungstechnisch zu isolieren. Die gezeigte Gasdruckfeder weist hierbei zwei übereinanderliegende Druckkammern auf, die über ein Drosselventil miteinander verbunden sind. Außerdem weist die Gasdruckfeder eine elektronisch-pneumatische Niveauregelung auf, die über Wegaufnehmer die Höhe der jeweiligen Gasdruckfeder misst und über eine hieran angeschlossene Regelung den Luftdruck in den Kammern so nachregelt, dass durch die jeweilige Gasdruckfeder die gewünschte Höhe erreicht wird.

Die Gasdruckfedern werden hier verwendet, um das Basisgestell des Koordinatenmessgerätes schwingungsisoliert auf einem Fundament lagern zu können. Außerdem wird der Gasdruck zur Höhenregulierung des Basisgestells gezielt verändert.

Die Druckschrift DE 103 32 001 B3 zeigt ein Schockdämpfungselement, welches als Gasdruckfeder ausgebildet ist. Dieses findet bei der schockelastischen Lagerung von Geräten und Betätigungsgestängen, insbesondere bei militärischem Gerät, Anwendung.

Die Druckschrift US 4,415,148 A zeigt eine federnde Lagerung für einen Verbrennungsmotor, die zwei mit Gas oder einer Flüssigkeit gefüllte Kammern aufweist.

Die Druckschrift EP 0 133 853 A2 zeigt eine aktive Gasdruckfeder für die Abstützung eines Maschinenelementes auf einem schwingenden Erreger.

Die Druckschrift JP 2003 097 938 A beschreibt eine Regelungseinrichtung für einen Aktuator, der mit einem Sensor versehen ist. Bei dem Sensor ist ein Taststift über ein Luftlager in einer Koordinatenrichtung beweglich gelagert.

Die Druckschrift DE 10 2007 057 849 A1 zeigt eine Druckluftfeder, die zur Gewichtskompensation eines in vertikaler Richtung beweglichen Messschlittens eines Koordinatenmessgerätes vorgesehen ist. Dazu ist die Druckluftfeder über einen Flaschenzug mit dem vertikal beweglichen Messschlitten verbunden.

Die Druckschrift DE 102 29 705 B3 zeigt ein Schwingfundament zur schwingungsisolierten Lagerung von Messgeräten oder Werkstücken. Hierbei ist das Schwingfundament auf vier in den vier unteren Ecken des Schwingfundamentes angeordneten Luftlagern gelagert. Das Schwingfundament ist in den entsprechenden unteren vier Ecken abgerundet, wobei die vier Luftlager entsprechend den Abrundungen der Ecken ausgeformte Negativrundungen aufweisen, so dass sich das Schwingfundament selber zwischen den Luftlagern zentriert. Die vier Luftlager sind jeweils auf Druckluftzylindern angeordnet, die wie Gasdruckfedern wirken. Die Druckluftzylinder umfassen hierbei einen Kolben, an dem das jeweilige Luftdrucklager befestigt ist, ein Druckkammergehäuse, sowie eine Rollmembran, die den Kolben und das Druckkammergehäuse miteinander verbindet und die den Kolben beweglich gegenüber dem Druckkammergehäuse lagert, wobei das Druckkammergehäuse und die Rollmembran eine Druckkammer ausbilden.

Ausgehend hiervon liegt unserer Erfindung daher die Aufgabe zugrunde, ein Koordinatenmessgerät der eingangs genannten Art mit einer alternativen Fluidlagerführung vorzuschlagen.

Die Aufgabe wird durch ein Koordinatenmessgerät mit sämtlichen Merkmalen des unabhängigen Anspruches 1 gelöst.

Die Besonderheit der erfindungsgemäßen Lösung ist hierbei darin zu sehen, dass die Kraft, mit der das Fluiddrucklager durch diese Gasdruckfeder gegen die ebene Führung gepresst wird, konstant bleibt. Hierdurch wird erreicht, dass die Fluiddrucklager und die den jeweiligen Fluiddrucklagern gegenüberliegenden Fluiddrucklager mit einer definierten Anfederkraft gegen die jeweilige ebene Führung gepresst werden und zwar weitgehend unabhängig von etwaigen fertigungsbedingten Abweichungen der Komponenten der Fluidlagerführung, wie beispielsweise Parallelitätsfehlern der Führungen oder fertigungsbedingten Abweichungen des Fluiddrucklagers oder der Federung. Insbesondere wird auch vermieden, dass sich bei variierenden Abständen der beiden parallelen Führungen die Anfederkraft abhängig vom Abstand der Führungen ändert. Sofern eine Justierung der Anfederkraft überhaupt noch notwendig sein sollte (beispielsweise infolge variierender Rauhigkeiten der Führung), kann diese sehr einfach erfolgen, indem der Druck der Gasdruckfeder etwas erhöht oder etwas reduziert wird. Weiterhin ist die Gasdruckfeder durch die Verwendung der Rollmembrane nahezu reibungsfrei ausgebildet,wie dies weiter unten im Zusammenhang mit den Ausführungsbeispielen dargestellt ist.

Die Gasdruckfeder einer Lagerbaugruppe eines erfindungsgemäßen Koordinatenmessgerätes umfaßt einen Kolben, an dem das Fluiddrucklager befestigt ist, ferner ein Druckkammergehäuse und außerdem eine Rollmembran, die den Kolben und das Druckkammergehäuse miteinander verbindet und die den Kolben beweglich gegenüber dem Druckkammergehäuse lagert, wobei das Druckkammergehäuse und die Rollmembran eine Druckkammer ausbilden.

Das erfindungsgemäße Koordinatenmessgerät ist hierbei so ausgeführt, dass die besagte ebene Führung auf einem Führungskörper mit rechteckigem oder quadratischem Querschnitt angeordnet ist, wobei der Führungskörper auf der der Führung gegenüberliegenden Seite zumindest eine weitere Führung aufweist, wobei ferner der Lagergrundkörper den Führungskörper zumindest teilweise umschließt und wobei am Lagergrundkörper im Bereich der weiteren Führung zumindest ein weiteres Fluiddrucklager befestigt ist, das unmittelbar am Lagergrundkörper anliegt.

An dieser Stelle soll ausdrücklich erwähnt werden, dass eine Führung, die auf einem Führungskörper angeordnet ist, sowohl bedeuten kann, dass die Führung in dem Führungskörper selber vorgesehen ist, beispielsweise durch Polieren der Oberfläche des Führungskörpers, oder aber dass auf dem Führungskörper eine separate Führung befestigt ist.

Weiterbildungen des erfindungsgemäßen Koordinatenmessgerätes sind den Ansprüchen 2-8 zu entnehmen.

In einer bevorzugten Weiterbildung der eben beschriebenen Gasdruckfeder kann die Gasdruckfeder zusätzlich noch ein zweites Druckkammergehäuse umfassen, wobei dann eine zweite Rollmembran vorgesehen ist, die das erste Druckkammergehäuse und das zweite Druckkammergehäuse miteinander verbindet, wobei das zweite Druckkammergehäuse und die zweite Rollmembran eine zweite Druckkammer ausbilden und wobei das erste Druckkammergehäuse eine Drossel aufweist, die die zweite Druckkammer und die erste Druckkammer miteinander verbindet.

Als Fluiddrucklager, das im ersten Bereich der Gasdruckfeder befestigt ist, eignet sich besonders ein Gasdrucklager, insbesondere ein Luftlager (auch als aerostatisches Gleitlager bezeichnet). Solche Gasdrucklager, insbesondere Luftlager (aerostatische Gleitlager), werden bereits seit Langem in der Koordinatenmesstechnik verwendet und haben sich sehr gut bewährt. Die eben beschriebene Lagerbaugruppe kann in ihren unterschiedlichen Ausgestaltungen natürlich im Koordinatenmessgerät Einsatz finden. Zum Betrieb der Gasdruckfeder weist das Koordinatenmessgerät zusätzlich eine Gasversorgungseinrichtung auf, die mit der Gasdruckfeder verbunden ist. Für den Fall, dass die Gasdruckfeder nur eine einzige Druckkammer aufweist, ist die Gasversorgungseinrichtung hierbei mit dem Druckkammergehäuse dieser Gasdruckfeder verbunden. Für den Fall, dass die Gasdruckfeder zwei Druckkammern aufweist, nämlich die oben beschriebene erste Druckkammer und die oben beschriebene zweite Druckkammer, so ist die Gasversorgungseinrichtung dann mit dem zweiten Druckkammergehäuse verbunden, das dem Fluiddrucklager weiter entfernt ist.

Vorzugsweise weist die Gasversorgungseinrichtung dabei einen Druckregler auf, über den ein konstanter Gasdruck in der Gasdruckfeder eingestellt wird. Zu Justierungszwecken sollte der Druckregler ein einstellbarer Druckregler sein, an dem der konstante Gasdruck einstellbar ist.

Vorteilhaft nutzen hierbei die Gasdruckfeder wie auch das Fluiddrucklager dasselbe Gas. In diesem Fall wird das Gasdrucklager ebenfalls von der Gasversorgungseinrichtung mit Gas versorgt.

Als Gas bietet sich besonders vorteilhaft Luft an. Natürlich können, sofern dies gewünscht sein sollte, auch andere Gase verwendet werden, wie beispielsweise reiner Stickstoff.

Weitere Vorteile und Weiterbildung der Erfindung ergeben sich aus den nachfolgend erläuterten
Figuren. Hierin zeigen:
- Figur 1:: Ein erfindungsgemäßes Koordinatenmessgerät 23
- Figur 2:: Rein schematische Prinzipdarstellung des Führungskörpers 18 des Koordinatenmessgerätes 23 aus Figur 1 im Schnitt nebst dem Lagergrundkörper 21, an dem eine Lagerbaugruppe 59, umfassend ein Fluiddrucklager 31 und eine Gasdruckfeder 55, angeordnet sind
- Figur 3:: Rein schematische Darstellung des ersten Messschlittens 15 des Koordinatenmessgerätes 23 aus Figur 1 im Schnitt und einen im Inneren des zweiten Messschlittens 3 befindlichen Lagergrundkörper 35, an dem unter anderem drei Lagerbaugruppen 59, umfassend ein Fluiddrucklager 31 und eine Gasdruckfeder 55, vorgesehen sind
- Figur 4:: Rein schematische Darstellung des dritten Messschlittens 4 aus dem Koordinatenmessgerät 23 gemäß Figur 1 im Schnitt und ein im Inneren des zweiten Messschlittens 3 angeordneter Lagergrundkörper 57, an dem unter anderem zwei Lagerbaugruppen 59, umfassend ein Fluiddrucklager 31 und eine Gasdruckfeder 55, angeordnet sind
- Figur 5:: Rein schematische Darstellung mit wichtigen Komponenten einer Fluidlagerführung, wobei eine erste Ausführungsform einer Lagerbaugruppe 59, umfassend ein Fluiddrucklager 31 und eine Gasdruckfeder 55 mit nur einer Druckkammer 53 gezeigt ist
- Figur 6:: Eine Darstellung ähnlich Figur 5, wobei eine gegenüber Figur 5 geänderte zweite Ausführungsform einer Lagerbaugruppe 59' gezeigt ist, bei der eine Gasdruckfeder 55' mit einer ersten Druckkammer 53' und einer zweiten Druckkammer 54' verwendet wird

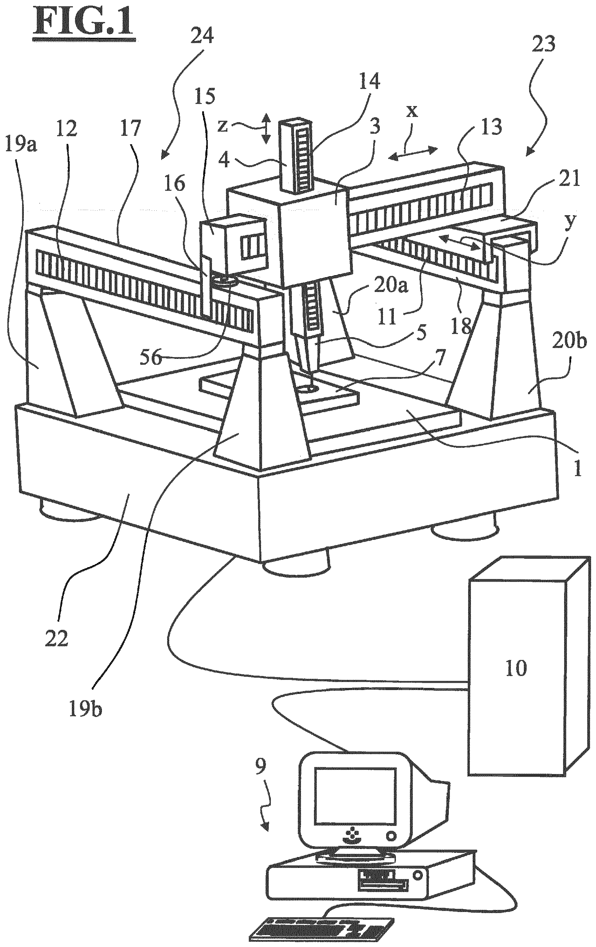

Figur 1 zeigt rein schematisch ein erfindungsgemäßes Koordinatenmessgerät 23. Das Koordinatenmessgerät 23 weist eine Basis 22 auf, die über vier in den Ecken befindliche Schwingungsdämpfer auf dem darunterliegenden Fundament gelagert ist. Die Basis 22 weist in einem zentralen Bereich eine Werkstückauflage 1 auf, auf der ein zu vermessendes Werkstück 7 aufliegt. Zum Abtasten der Oberfläche des Werkstückes 7 ist hierbei ein Sensor 5 vorgesehen, der über einen ersten Messschlitten 15, einen zweiten Messschlitten 3 und einen dritten Messschlitten 4 in den mit den Pfeilen x, y und z bezeichneten Koordinatenrichtungen relativ zu dem auf der Werkstückauflage 1 aufliegenden Werkstück 7 verschiebbar gelagert ist. Der erste Messschlitten 15 ist hierbei, wie dies noch weiter unten im Detail ausgeführt werden wird, über eine Fluidlagerführung in der mit dem Pfeil y bezeichneten Richtung beweglich gelagert. Die Führung erfolgt hierbei entlang von zwei parallelen Führungskörpern 17 und 18, auf denen Führungen angeordnet sind, wobei der Führungskörper 17 über zwei Stützen 19a, 19b auf der Basis 22 aufliegt, während der Führungskörper 18 über zwei Stützen 20a, 20b ebenfalls auf der Basis 22 aufliegt. Der erste Messschlitten 15 umfasst hierbei außerdem noch zwei Antriebe, mit denen der Messschlitten 15 in der mit dem Pfeil y bezeichneten Richtung angetrieben werden kann, sowie zwei Maßstäbe 11 und 12, über die die jeweilige Position des ersten Messschlittens 15 relativ zum Führungskörper 18 und zum Führungskörper 17 ermittelt werden kann. Entlang des ersten Messschlittens 15 ist über eine weitere Fluidlagerführung, die ebenfalls weiter unten im Detail besprochen werden wird, der zweite Messschlitten 3 in der mit dem Pfeil x bezeichneten Koordinatenrichtung, die senkrecht auf die mit dem Pfeil y bezeichnete Koordinatenrichtung steht, beweglich geführt. Der zweite Schlitten 3 umfasst ebenfalls einen Antrieb zur Bewegung in der mit dem Pfeil x bezeichneten Richtung. Außerdem ist ein Maßstab 13 vorgesehen, über den die Position des zweiten Messschlittens 3 relativ zum ersten Messschlitten 15 bestimmt werden kann. Zusätzlich ist noch ein dritter Messschlitten 4 vorgesehen, der in der mit dem Pfeil z bezeichneten Richtung über eine ebenfalls weiter unten noch im Detail dargestellte Fluidlagerführung in der dritten Koordinatenrichtung beweglich geführt ist. Diese dritte Koordinatenrichtung z steht wiederum senkrecht auf die erste Koordinatenrichtung y und die zweite Koordinatenrichtung x. Auch hierfür ist ein Antrieb vorgesehen, der den dritten Messschlitten 4 in der mit dem Pfeil z bezeichneten Richtung bewegt und ein Maßstab 14, über den die jeweilige Position des Messschlittens 4 in der mit dem Pfeil z bezeichneten Richtung erfasst werden kann. Über die eben beschriebene Mechanik 24 kann somit also der Sensor 5 in den drei Koordinatenrichtungen x, y, z relativ zum Werkstück 7 bewegt werden und dieses abtasten. Des Weiteren ist noch eine Steuerung 10 vorgesehen, die die Antriebe der Mechanik 24 ansteuert und die Signale der Maßstäbe 11, 12, 13 und 14, sowie die Signale des Sensors 5 ausliest und hieraus während der Antastung des Werkstückes 7 Messwerte ermittelt. Außerdem ist für den Bediener des Koordinatenmessgerätes ein Rechner 9 vorgesehen, über den Messabläufe erstellt werden können, die an die Steuerung 10 übergeben werden, wobei die Steuerung 10 diese Messabläufe ausführt. Außerdem werden die von der Steuerung 10 ermittelten Messwerte an den Messrechner 9 rückübermittelt, wobei der Messrechner 9 aus diesen Messwerten die Messergebnisse ermitteln kann.

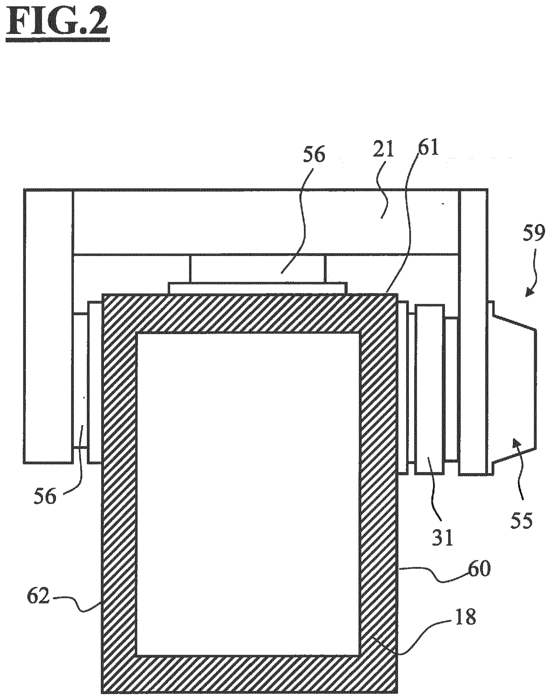

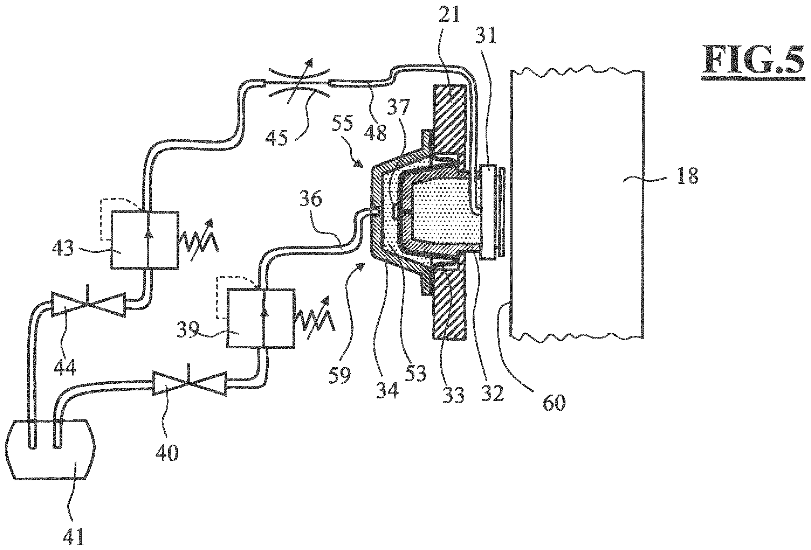

Im Zusammenhang mit den Figuren 2 und 5 soll nunmehr die lineare Fluidlagerführung besprochen werden, über die der erste Messschlitten 15 relativ zum Führungskörper 18 in der mit dem Pfeil y bezeichneten Koordinatenrichtung beweglich geführt ist. Figur 2 zeigt hierbei eine rein schematische Darstellung des Führungskörpers 18 im Schnitt und des Lagergrundkörpers 21, aus Figur 1. Wie aus Figur 1 noch zu ersehen, ist am Lagergrundkörper 21 der erste Messschlitten 15 befestigt. Am Lagergrundkörper 21 sind zunächst zwei Fluiddrucklager 56 angeordnet, die in unmittelbarem Kontakt mit dem Lagergrundkörper 21 stehen. Die Fluiddrucklager 56 sind hierbei als Luftlager (aerostatisches Gleitlager) ausgestaltet. Diese Fluiddrucklager 56 laufen auf Führungen 61 und 62, die auf dem Führungskörper 18 angeordnet sind. Außerdem ist am Lagergrundkörper 21 des Weiteren eine Lagerbaugruppe 59, umfassend ein Fluiddrucklager 31 und eine Gasdruckfeder 55 dargestellt. Das Fluiddrucklager 31 der Lagerbaugruppe 59 ist hierbei auf einer Führung 60 des Lagergrundkörpers 60 geführt. Diese Lagerbaugruppe 59 wird nunmehr anhand von Figur 5 näher erläutert.

Figur 5 zeigt rein schematisch wichtige Komponenten einer Fluidlagerführung, wobei hierbei eine erste Ausführungsform einer Lagerbaugruppe 59 aus Figur 2 gezeigt ist.

Hierbei sind die Komponenten der Gasdruckfeder 55 (Druckkammergehäuse 34, Rollmembran 33 und Kolben 32) im Schnitt dargestellt, während das Fluiddrucklager 31 nicht geschnitten wurde. Außerdem geschnitten dargestellt ist auch der Teil des nur ausschnittsweise dargestellten Lagergrundkörpers 21. Ferner dargestellt ist ausschnittsweise der Führungskörper 18 und die hierauf angeordnete Führung 60. Die besagte Lagerbaugruppe 59 umfasst hierbei ein Fluiddrucklager 31 und eine Gasdruckfeder 55, deren genaue Funktion im Folgenden erläutert wird. Die Gasdruckfeder 55 umfasst hierbei einen Kolben 32, an dem das Fluiddrucklager 31 befestigt ist. Außerdem umfasst die Gasdruckfeder 55 ein Druckkammergehäuse 34 und eine Rollmembran 33. Die Rollmembran 33 verbindet hierbei den Kolben 32 und das Druckkammergehäuse 34 miteinander, wodurch der Kolben 32 beweglich gegenüber dem Druckkammergehäuse 34 gelagert wird. Die Rollmembran 33 ist hierbei mit einer Schraube 37 am Kolben 32 festgeschraubt. Außerdem ist die Rollmembran 33 in ihrem Außenbereich mit dem Druckkammergehäuse 34 verklebt. Hierdurch bilden das Druckkammergehäuse 34 und die Rollmembran 33 eine Druckkammer 53 aus. Die besagte Lagerbaugruppe 59 umfasst damit dann also ein Fluiddrucklager 31 und eine Federung 55 mit zwei relativ zueinander gefederten Bereichen (der Kolben 32 ist relativ zum Druckkammergehäuse 34 gefedert) wobei an einem ersten Bereich, nämlich am Kolben 32, das Fluiddrucklager 31 befestigt ist und deren zweiter Bereich, nämlich das Druckkammergehäuse 34 dazu eingerichtet ist, an einem Lagergrundkörper 21 befestigt zu werden. Die Federung ist damit im vorliegenden Fall eine Gasdruckfeder 55. Im vorliegenden Fall ist die besagte Lagerbaugruppe 59 konkret am Lagergrundkörper 21 über mehrere Schrauben befestigt. Um die Gasdruckfeder 55 mit dem notwendigen Gas zu versorgen, ist eine Gasversorgungseinrichtung 41 vorgesehen, die über ein Absperrventil 40 und über ein einstellbares Druckregelventil 39 durch eine Gaszuführung 36 mit dem Druckkammergehäuse 34 verbunden ist und hierdurch die Druckkammer 53 mit Gas füllt. Der besagte Druckregler 39 sorgt hierbei dafür, dass in der Druckkammer ein konstanter Gasdruck eingestellt wird. Der Druckregler 39 ist als einstellbarer Druckregler ausgeführt, an dem der konstante Gasdruck einstellbar ist, so dass der Luftdruck in der Gasdruckfeder 55 variiert werden kann, um den Lagerspalt zwischen dem Fluiddrucklager 31 und der Führung 60 entsprechend einzustellen. Das Fluiddrucklager 31 ist im vorliegenden Fall ebenfalls als Gasdrucklager ausgestaltet und wird hier ebenfalls von der Gasversorgungseinrichtung 41 über eine Gaszuführung 48 mit Gas versorgt. Wie man Figur 5 entnehmen kann, ist in der Gaszuführung 48 für das Gasdrucklager 31 ebenfalls ein Absperrventil 44, ein einstellbares Druckregelventil 43 und ein einstellbares Drosselventil 45 vorgesehen.

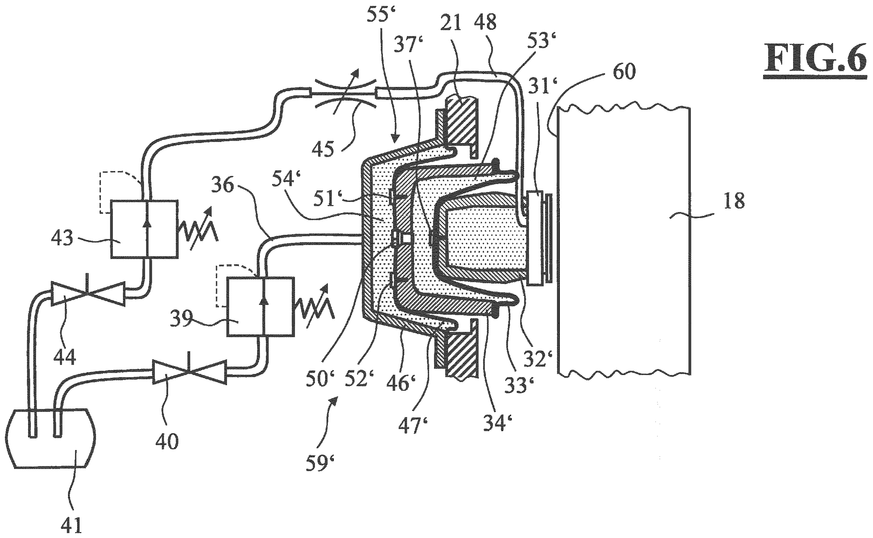

Gemäß einer Weiterbildung der Erfindung kann die besagte Lagerbaugruppe 59, umfassend ein Fluiddrucklager 31 und eine Gasdruckfeder 55 auch wie in Figur 6 ausgestaltet sein. Figur 6 zeigt hierbei eine analoge Darstellung von wichtigen Komponenten einer Fluidlagerführung wie Figur 5. Gleiche Bauteile wie in Figur 5 wurden hierbei auch mit gleichen Bezugszeichen versehen, wobei die Bezugszeichen, die im Zusammenhang mit der Lagerbaugruppe 59' stehen zusätzlich mit einem Strich hinter dem Bezugszeichen versehen wurden. Insoweit gelten die Ausführungen zu Figur 5 vollkommen analog auch für Figur 6.

In der Lagerbaugruppe 59' ist hierbei das am Kolben 32' des Gasdrucklagers55' befestigte Fluiddrucklager 31' genauso aufgebaut, wie das am Kolben 32 befestigte Fluiddrucklager 31 gemäß Figur 5. Insoweit gelten für das Fluiddrucklager 31' vollkommen analog die Ausführungen zu Figur 5.

Der wesentliche Unterschied der Ausführungsform der Lagerbaugruppe 59' gemäß Figur 6 gegenüber der Ausführungsform der Lagerbaugruppe 59 gemäß Figur 5 ist hierbei in der Ausgestaltung der Gasdruckfeder 55' zu sehen. Wie man aus Figur 6 ersehen kann, weist die Gasdruckfeder 55' in dieser Ausführungsform neben einem ersten Druckkammergehäuse 34' und einer ersten Rollmembran 33' zusätzlich ein zweites Druckkammergehäuse 46' auf und eine zweite Rollmembran 47' auf, die das erste Druckkammergehäuse 33' und das zweite Druckkammergehäuse 46' miteinander verbindet. Der Kolben 32', die erste Rollmembran 33' und das erste Druckkammergehäuse 34' sind hierbei nahezu identisch aufgebaut, wie das gesamte Gasdrucklager 55 aus Figur 5.

Im Wesentlichen neu hinzugekommen zur Gasdruckfeder 55' gegenüber der Gasdruckfeder 55 aus Figur 5 ist das zweite Druckkammergehäuse 46' und die zweite Rollmembran 47', die hierbei eine zweite Druckkammer 54' ausbilden. Zur Befestigung des ersten Druckkammergehäuses 34' an der zweiten Rollmembran 47' sind hierbei zwei Schrauben 51' und 52' vorgesehen. Das erste Druckkammergehäuse 34' weist außerdem abweichend gegenüber dem Druckkammergehäuse 34 aus Figur 5 anstelle einer Gaszuführung 36 eine Drossel 50' auf, die die zweite Druckkammer 54' und die erste Druckkammer 53' miteinander verbindet. Damit weist die hier gezeigte Gasdruckfeder 55' anders, als die Gasdruckfeder 55 aus Figur 5, nunmehr zwei Druckkammern 53' und 54' auf, wodurch die Gasdruckfeder 55' insgesamt weicher wird als die Gasdruckfeder 55 gemäß Figur 5. Anders als die Gaszuführung 36 in Figur 5 ist im vorliegenden Ausführungsbeispiel gemäß Figur 6 die Gaszuführung 36 mit dem zweiten Druckkammergehäuse 46' verbunden.

Unter Berücksichtigung der Ausführungen zu den Figuren 2, 5 und 6 kann unter Bezugnahme auf Figur 1 damit für die lineare Fluidlagerführung des ersten Messschlittens 15 entlang des rechten Führungskörpers 18 festgestellt werden, dass ein Messschlitten 15 vorgesehen ist, über den der Sensor 5 zum Abtasten der Oberfläche eines Werkstückes 7 relativ zu dem auf der Werkstückauflage 1 aufliegenden Werkstücke 7 in der Koordinatenrichtung y verschiebbar gelagert ist. Der Messschlitten 15 ist dazu über eine Fluidlagerführung relativ zu einer den Messschlitten lagernden Komponente, nämlich im vorliegenden Fall gegenüber dem Führungskörper 18 beweglich in der Koordinatenrichtung y geführt. Diese Fluidlagerführung weist hierbei eine ebene Führung, nämlich die Führung 60 auf dem Führungskörper 18 auf und ein mit der Führung 60 zusammenwirkendes Fluiddrucklager 31 (oder 31'). Dieses Fluiddrucklager 31 (oder 31') ist hierbei Bestandteil einer Lagerbaugruppe 59 (oder 59'), die neben dem Fluiddrucklager 31 (oder 31') zusätzlich eine Federung 55 (oder 55') mit zwei relativ zueinander gefederten Bereichen umfasst, wobei an einem ersten Bereich das Fluiddrucklager 31 (oder 31') befestigt ist und wobei deren zweiter Bereich an einem Lagergrundkörper 21 befestigt ist. Im vorliegenden Fall ist der Lagergrundkörper 21 hierbei am Messschlitten 15 angeordnet, während die ebene Führung 60 an der lagernden Komponente, nämlich dem Führungskörper 18 des Koordinatenmessgerätes 23 angeordnet ist. Die die Federung 55 (oder 55') ist hierbei eine Gasdruckfeder.

Im Übrigen ist hierbei die ebene Führung 60 auf einem Führungskörper 18 mit rechteckigem Querschnitt angeordnet, wobei der Führungskörper 18 auf der der Führung 60 gegenüberliegenden Seite zumindest eine weitere Führung 62 aufweist, wobei ferner der Lagergrundkörper 21 den Führungskörper 18 zumindest teilweise umschließt und wobei am Lagergrundkörper 21 im Bereich der weiteren Führung 62 zumindest ein weiteres Fluiddrucklager 56 befestigt ist, das unmittelbar am Lagergrundkörper 21 anliegt.

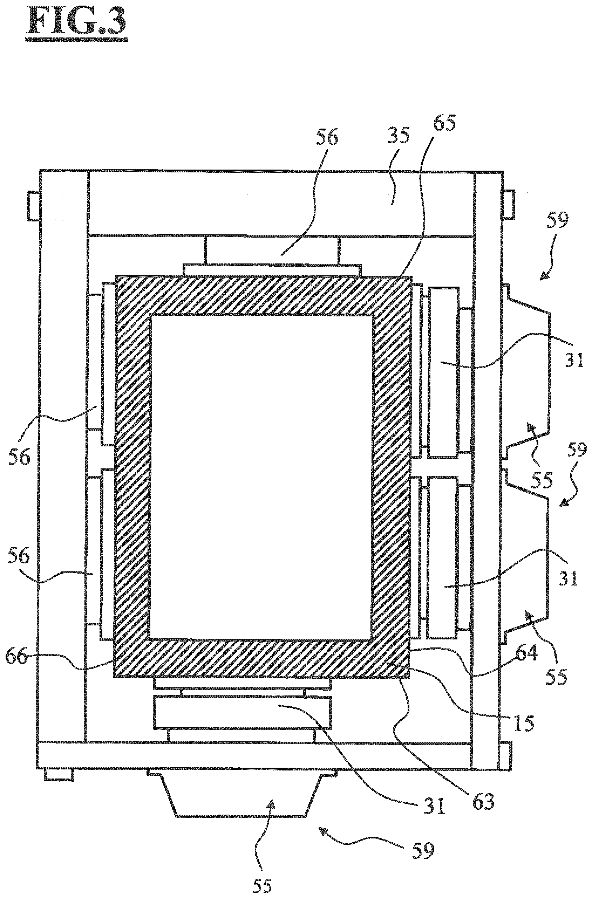

Im Weiteren wird nun anhand von Figur 3 die Lagerung des zweiten Messschlittens 3 entlang dem ersten Messschlitten 15 des Koordinatenmessgerätes aus Figur 1 in der mit dem Pfeil x bezeichneten Koordinatenrichtung erläutert. In Figur 3 ist hierbei ebenfalls rein schematisch der erste Messschlitten 15 im Schnitt gezeichnet. Dieser erste Messschlitten 15 stellt hierbei gleichzeitig an seinen vier Außenseiten vier ebene Führungen 63 bis 66 bereit, auf denen Fluiddrucklager geführt sind. Insoweit ist der erste Messschlitten 15 gleichzeitig ein Führungskörper, auf dem die Führungen 63 bis 66 angeordnet sind. Außerdem ist ein weiterer Lagergrundkörper 35 zu sehen, der im Inneren des zweiten Messschlittens 3 aus Figur 1 angeordnet ist, und deshalb in Figur 1 nicht gesehen werden kann. An dem Lagergrundkörper 35 wiederum ist der zweite Messschlitten 3 befestigt. Auf zwei direkt aneinander anliegenden Innenseiten der insgesamt vier Innenseiten des Lagergrundkörpers sind hierbei Fluiddrucklager 56 angeordnet. Genau wie in Figur 2 handelt es sich bei diesen drei Fluiddrucklagern 56 um Luftlager, die unmittelbar am Lagergrundkörper 35 anliegen. Dabei können sie entweder monolitisch in den Lagergrundkörper 35 eingearbeitet sein oder aber nur an dem Lagergrundkörper 35 anliegen. Die Fluiddrucklager 56 sind hierbei auf den Führungen 65 und 66 des ersten Messschlitten 15 geführt. Auf den beiden den Fluiddrucklagern 56 jeweils gegenüberliegenden Seiten sind erfindungsgemäße Lagerbaugruppen 59 vorgesehen, die jeweils ein Fluiddrucklager 31 und eine Gasdruckfeder 55 aufweisen. Diese Lagerbaugruppen 59 entsprechen exakt der Lagerbaugruppe 59 gemäß Figur 5. Alternativ können statt dessen natürlich auch Lagerbaugruppen 59' gemäß Figur 6 verwendet werden. Die Fluiddrucklager 31 (oder 31') dieser Lagerbaugruppen sind auf den Führungen 63 und 64 geführt.

Damit ist auch hierdurch ein Koordinatenmessgerät 23 mit zumindest einem Messschlitten 3 gezeigt, über den der Sensor 5 zum Abtasten der Oberfläche des Werkstückes 7 relativ zu einem auf der Werkstückauflage 1 aufliegenden Werkstück 7 in zumindest einer Koordinatenrichtung, nämlich der Koordinatenrichtung mit dem Pfeil x, verschiebbar gelagert ist. Der zweite Messschlitten 3 ist dazu wiederum über eine Fluidlagerführung relativ zu einer den Messschlitten lagernden Komponente, nämlich im vorliegenden Fall relativ zum ersten Messschlitten 15 beweglich in der Koordinatenrichtung x geführt. Diese Fluidlagerung umfasst außerdem eine ebene Führung (Führung 63 oder auch Führung 64) und ein mit der Führung zusammenwirkendes Fluiddrucklager 31 (oder 31'), wobei das Fluiddrucklager Bestandteil einer Lagerbaugruppe 59 (oder 59') ist, die neben dem Fluiddrucklager 31 (oder 31') zusätzlich eine Federung 55 (oder 55') mit zwei relativ zueinander gefederten Bereichen umfasst, wobei an einem ersten Bereich das Fluiddrucklager 31 (oder 31') befestigt ist und wobei deren zweiter Bereich am Lagergrundkörper 35 befestigt ist. Auch im vorliegenden Fall ist hierbei der Lagergrundkörper 35 am Messschlitten 3 angeordnet und die ebene Führung an der zu lagernden Komponente, nämlich am Messschlitten 15, angeordnet. Die Federung 55 (oder 55') ist hierbei eine Gasdruckfeder.

Auch hierbei ist die ebene Führung (also sowohl die Führung 63, als auch die Führung 64) auf einem Führungskörper (hier ist der Führungskörper der erste Messschlitten 15) mit rechteckigem Querschnitt angeordnet, wobei der Führungskörper (Messschlitten 15) auf der der Führung (63 und auch 64) gegenüberliegenden Seite zumindest eine weitere Führung (65 und 66) aufweist, wobei ferner der Lagergrundkörper 35 den Führungskörper (Messschlitten 15) vollständig umschließt und wobei am Lagergrundkörper 35 im Bereich der weiteren Führung (also sowohl Führung 65, als auch Führung 66) zumindest ein weiteres Fluiddrucklager 56 befestigt ist, das damit unmittelbar am Lagergrundkörper 35 anliegt.

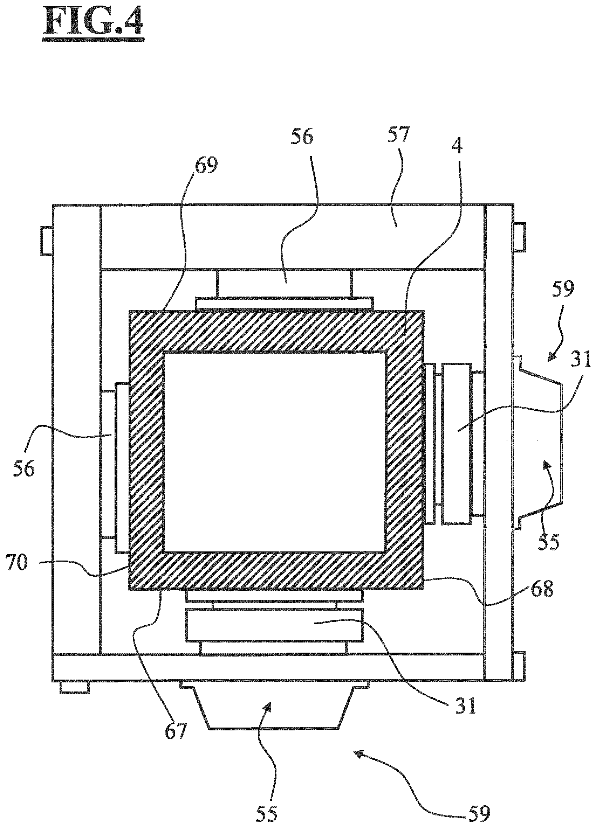

Hinsichtlich der Führung des dritten Messschlittens 4 erfolgt die Lagerung dieses Messschlittens 4, wie dies im Zusammenhang mit Figur 4 erläutert wird. Figur 4 zeigt hierbei ebenfalls wiederum rein schematisch den dritten Messschlitten 4 gemäß Figur 1 im Schnitt. Außerdem ist der Lagergrundkörper 57 gezeigt, der sich ebenfalls im Inneren des zweiten Messschlittens 3 befindet und der an diesem zweiten Messschlitten 3 befestigt ist. Wie aus Figur 4 zu sehen, sind hierbei wiederum an zwei direkt aneinander anliegenden der vier Innenseiten des Lagergrundkörpers 57 Fluiddrucklager 56 angeordnet, die wiederum als Luftlager ausgebildet sind und die in unmittelbarem Kontakt mit dem Lagergrundkörper 57 stehen. Die Fluiddrucklager 56 sind hierbei auf Führungen 69 und 70 geführt, die auf den Außenseiten des Messschlittens 4 angeordnet sind. Der Messschlitten 4 ist hierdurch gleichzeitig auch ein Führungskörper. An den gegenüberliegenden Seiten des Lagergrundkörpers 57 sind hingegen erfindungsgemäß die Lagerbaugruppen 59 vorgesehen, die jeweils ein Fluiddrucklager 31 und eine Gasdruckfeder 55 enthalten. Auch diese Lagerbaugruppen 59 entsprechen der im Zusammenhang mit Figuren 5 beschriebenen Ausführungsvariante. Selbstverständlich können anstelle der in Figur 5 gezeigten Lagerbaugruppen 59 alternativ auch die in Figur 6 gezeigten Lagerbaugruppen 59' verwendet werden. Die Fluiddrucklager 31 (oder 31') der Lagerbaugruppen 59 (oder 59') sind hierbei auf Führungen 67 und 68 geführt, die ebenfalls auf dem Messschlitten 4 angeordnet sind.

Anders als in den im Zusammenhang mit den Figuren 2 und 3 beschriebenen Fällen ist im vorliegenden Fall der Lagergrundkörper 57 nicht am Messschlitten 4 befestigt, der beweglich gelagert werden soll, sondern vielmehr an der den Messschlitten 4 lagernden Komponente, im vorliegenden Fall also am zweiten Messschlitten 3. Damit ist hierdurch ebenfalls ein Koordinatenmessgerät mit zumindest einem Messschlitten 4 gezeigt, über den der Sensor 5 zum Abtasten der Oberfläche des Werkstückes 7 relativ zum auf der Werkstückauflage 1 aufliegenden Werkstück 7 in der Koordinatenrichtung z verschiebbar gelagert ist. Der Messschlitten 4 ist dazu über eine Fluidlagerführung relativ zu einer den Messschlitten 4 lagernden Komponente (der zweite Messschlitten 3), beweglich in der Koordinatenrichtung z geführt. Diese Fluidlagerführung weist ebenfalls eine ebene Führung (siehe Führungen 67 und 68 auf dem dritten Messschlitten 4) auf und ein mit der Führung zusammenwirkendes Fluiddrucklager 31 (oder 31'), wobei dieses Fluiddrucklager 31 (oder 31') Bestandteil einer Lagerbaugruppe 59 (oder 59') ist, die neben dem Fluiddrucklager zusätzlich eine Federung 55 (oder 55') in Form einer Gasdruckfeder umfasst, mit zwei relativ zueinander gefederten Bereichen, wobei an einem ersten Bereich das Fluiddrucklager 31 (oder 31') befestigt ist und wobei deren zweiter Bereich am Lagergrundkörper 57 befestigt ist. Im vorliegenden Fall ist außerdem der Lagergrundkörper 57 an der lagernden Komponente, hier also dem zweiten Messschlitten 3, angeordnet und die ebene Führung ist am Messschlitten 4 angeordnet.

Auch hierbei ist die ebene Führung (also sowohl die Führung 67, als auch die Führung 68) auf einem Führungskörper (hier der dritte Messschlitten 4) mit quadratischem Querschnitt angeordnet, wobei der Führungskörper (dritter Messschlitten 4) auf der der Führung (sowohl Führung 67, als auch Führung 68) gegenüberliegenden Seite zumindest eine weitere Führung (69 und 70) aufweist, wobei ferner der Lagergrundkörper 57 den Führungskörper 4 vollständig umschließt und wobei am Lagergrundkörper 57 im Bereich der weiteren Führung (also sowohl Führung 69, als auch Führung 70) zumindest ein weiteres Fluiddrucklager 56 befestigt ist, das unmittelbar am Lagergrundkörper 57 anliegt.

Höchst vorsorglich sei an dieser Stelle darauf hingewiesen, dass der Aufbau des in Figur 1 gezeigten Koordinatenmessgerätes 23 natürlich rein beispielhaft ist. Selbstverständlich kann beispielsweise die in Figur 1 gezeigte Mechanik 24 vielfältig variieren. Anstelle des gezeigten Sensors 5, der hier rein beispielhaft taktil ist, kann natürlich auch ein anderer Sensor verwendet werden, beispielsweise ein optischer Sensor. Auch die Anordnung der Fluidlagerführungen kann natürlich anders sein. Beispielsweise kann es sich anstelle des in Figur 1 gezeigten Brückenmessgerätes auch um ein Portalmessgerät handeln, bei dem anstelle des brückenartigen ersten Messschlittens 15 ein Portal verwendet wird. Genauso kann auch ein Horizontalarmmessgerät verwendet werden.

**Bezugszeichenliste:**

| | | | |
|---|---|---|---|
| 1 = | Werkstückauflage | 40 | = Absperrventil |
| 3 = | zweiter Messschlitten | 41 | = Gasversorgungseinrichtung |
| 4 = | dritter Messschlitten | | |
| 5 = | Sensor | 43 | = einstellbares Druckregelventil |
| 7 = | Werkstück | 44 | = Absperrventil |
| 9 = | Messrechner | 45 | = einstellbares Drosselventil |
| 10 = | Steuerung | 46' | = zweites Druckkammergehäuse |
| 11-14 = | Maßstab | 47' | = zweite Rollmembrane |
| 15 = | erster Messschlitten | 48 | = Gaszuführung |
| 16 = | Maßstabserfassungssensor | | |
| 17-18 = | Führungskörper | 50' = | Drosselventil |
| 19a, 19b = | Stützen | 51' = | Schraube |
| 20a, 20b = | Stützen | 52' = | Schraube |
| 21 = | Lagergrundkörper | 53; 53' = | (erste) Druckkammer |
| 22 = | Basis | 54' = | zweite Druckkammer |
| 23 = | Koordinatenmessgerät | 55; 55' = | Gasdruckfeder |
| 24 = | Mechanik | 56 = | Fluiddrucklager |
| 31; 31' = | Fluiddrucklager | 57 = | Lagergrundkörper |
| 32; 32' = | Kolben | 59; 59' = | Lagerbaugruppe |
| 33; 33' = | (erste) Rollmembran | 60-70= | Führungen |
| 34; 34' = | (erstes) Druckkammergehäuse | | |
| 35 = | Lagergrundkörper | | |
| 36 = | Gaszuführung | | |
| 37; 37' = | Schraube | | |
| 39 = | einstellbares Druckregelventil | | |

## Patentansprüche

1. Koordinatenmessgerät mit zumindest einem Messschlitten (15, 3, 4), über den ein Sensor (5) zum Abtasten der Oberfläche eines Werkstückes (7) relativ zu einem auf einer Werkstückauflage (1) aufliegenden Werkstück (7) in zumindest einer Koordinatenrichtung (x, y, z) verschiebbar gelagert ist, wobei der Messschlitten (15, 3, 4) dazu über eine Fluidlagerführung relativ zu einer den Messschlitten lagernden Komponente beweglich in der Koordinatenrichtung (x, y, z) geführt ist, und wobei diese Fluidlagerführung eine ebene Führung (60, 63, 64, 67, 68) und ein mit der Führung (60, 63, 64, 67, 68) zusammenwirkendes Fluiddrucklager (31; 31') umfasst, wobei das Fluiddrucklager (31; 31') Bestandteil einer Lagerbaugruppe (59; 59') ist, die neben dem Fluiddrucklager (31; 31') zusätzlich eine Federung (55; 55') mit zwei relativ zueinander gefederten Bereichen umfasst, wobei an einem ersten Bereich das Fluiddrucklager (31; 31') befestigt ist und wobei deren zweiter Bereich an einem Lagergrundkörper (21; 35; 57) befestigt ist, und wobei entweder der Lagergrundkörper (57) an der lagernden Komponente (3) angeordnet ist, und die ebene Führung (67, 68) am Messschlitten (4) angeordnet ist oder der Lagergrundkörper (35; 57) am Messschlitten (15, 3) angeordnet ist und die ebene Führung (60, 63, 64) an der lagernden Komponente (15, 18) angeordnet ist, wobei die Federung eine Gasdruckfeder ist, **dadurch gekennzeichnet,**
a) **dass** die Gasdruckfeder (55; 55') folgendes umfasst:
- einen Kolben (32; 32'), an dem das Fluiddrucklager (31; 31') befestigt ist
- ein Druckkammergehäuse (34; 34'),
- eine Rollmembran (33; 33'), die den Kolben (32; 32') und das Druckkammergehäuse (34; 34') miteinander verbindet und die den Kolben (32; 32') beweglich gegenüber dem Druckkammergehäuse (34; 34') lagert, wobei das Druckkammergehäuse (34; 34') und die Rollmembran (33; 33') eine Druckkammer (53; 53') ausbilden, und
b) **dass** die ebene Führung (60, 63, 64, 67, 68) auf einem Führungskörper (18, 15, 4) mit rechteckigem oder quadratischem Querschnitt angeordnet ist, wobei der Führungskörper (18, 15, 4) auf der der Führung gegenüberliegenden Seite zumindest eine weitere Führung (62, 65, 66, 69, 70) aufweist, wobei der Lagergrundkörper (21, 35, 57) den Führungskörper (18, 15, 4) zumindest teilweise umschließt und wobei ferner am Lagergrundkörper (21, 35, 57) im Bereich der weiteren Führung (62, 65, 66, 69, 70) zumindest ein weiteres Fluiddrucklager (56) befestigt ist, das unmittelbar am Lagergrundkörper (21, 35, 57) anliegt.

2. Koordinatenmessgerät nach dem vorhergehenden Anspruch, wobei die Gasdruckfeder (55') der Lagerbaugruppe (59; 59') zusätzlich ein zweites Druckkammergehäuse (46') umfasst, und eine zweite Rollmembran (47') vorgesehen ist, die das erste Druckkammergehäuse (34') und das zweite Druckkammergehäuse (46') miteinander verbindet, wobei das zweite Druckkammergehäuse (46') und die zweite Rollmembran (47') eine zweite Druckkammer (54') ausbilden und wobei das erste Druckkammergehäuse (34') eine Drossel (50') aufweist, die die zweite Druckkammer (54') und die erste Druckkammer (53') miteinander verbindet.

3. Koordinatenmessgerät nach einem der vorhergehenden Ansprüche, wobei das Fluiddrucklager der Lagerbaugruppe (59; 59') ein Gasdrucklager ist.

4. Koordinatenmessgerät nach einem der Ansprüche 1 bis 3, wobei das Koordinatenmessgerät zusätzlich eine Gasversorgungseinrichtung (41) umfasst, die im Falle einer Gasdruckfeder nach Anspruch 1 mit dem Druckkammergehäuse (34) verbunden ist, oder im Falle einer Gasdruckfeder nach Anspruch 2 mit dem zweiten Druckkammergehäuse (46') verbunden ist.

5. Koordinatenmessgerät nach Anspruch 4, wobei die Gasversorgungseinrichtung einen Druckregler (39) aufweist, über den ein konstanter Gasdruck eingestellt wird.

6. Koordinatenmessgerät nach Anspruch 5, wobei der Druckregler ein einstellbarer Druckregler (39) ist, an dem der konstante Gasdruck einstellbar ist.

7. Koordinatenmessgerät nach Anspruch 4, 5 oder 6 mit einer Lagerbaugruppe nach Anspruch 3, wobei das Gasdrucklager ebenfalls von der Gasversorgungseinrichtung mit Gas versorgt wird.

8. Koordinatenmessgerät nach einem der vorhergehenden Ansprüche 1 bis 7, wobei das Gas Luft ist.

## Claims

1. Coordinate measuring device having at least one measuring carriage (15, 3, 4), via which a sensor (5) for scanning the surface of a workpiece (7) is mounted such that it can be displaced in at least one coordinate direction (x, y, z) relative to a workpiece (7) resting on a workpiece support (1), the measuring carriage (15, 3, 4) for this purpose being guided movably in the coordinate direction (x, y, z) relative to a component supporting the measuring carriage via a fluid bearing guide, and this fluid bearing guide comprising a flat guide (60, 63, 64, 67, 68) and a fluid pressure bearing (31; 31') cooperating with the guide (60, 63, 64, 67, 68), the fluid pressure bearing (31; 31') being a constituent part of a bearing assembly (59; 59') which, in addition to the fluid pressure bearing (31; 31'), additionally comprises a spring system (55; 55') having two regions sprung relative to each other, the fluid pressure bearing (31; 31') being fixed to a first region and its second region being fixed to a bearing base body (21; 35; 57), and either the bearing base body (57) being arranged on the supporting component (3) and the flat guide (67, 68) being arranged on the measuring carriage (4), or the bearing base body (35; 57) being arranged on the measuring carriage (15, 3) and the flat guide (60, 63, 64) being arranged on the supporting component (15, 18), the spring system being a gas pressure spring, **characterized in that**
a) the gas pressure spring (55; 55') comprises the following:
- a piston (32; 32'), to which the fluid pressure bearing (31; 31') is fixed,
- a pressure chamber housing (34; 34'),
- a rolling diaphragm (33; 33'), which connects the piston (32; 32') and the pressure chamber housing (34; 34') to each other and which supports the piston (32; 32') movably with respect to the pressure chamber housing (34; 34'), wherein the pressure chamber housing (34; 34') and the rolling diaphragm (33; 33') form a pressure chamber (53; 53'), and
b) **in that** the flat guide (60, 63, 64, 67, 68) is arranged on a guide body (18, 15, 4) with a rectangular or square cross section, wherein the guide body (18, 15, 4) has at least one further guide (62, 65, 66, 69, 70) on the side opposite the guide, wherein the bearing base body (21, 35, 57) at least partly encloses the guide body (18, 15, 4), and wherein, in addition, at least one further fluid pressure bearing (56), which rests directly on the bearing base body (21, 35, 57), is fixed to the bearing base body (21, 35, 57) in the region of the further guide (62, 65, 66, 69, 70).

2. Coordinate measuring device according to the preceding claim, wherein the gas pressure spring (55') of the bearing assembly (59; 59') additionally comprises a second pressure chamber housing (46'), and a second rolling diaphragm (47') is provided, which connects the first pressure chamber housing (34') and the second pressure chamber housing (46') to each other, wherein the second pressure chamber housing (46') and the second rolling diaphragm (47') form a second pressure chamber (54'), and wherein the first pressure chamber housing (34') has a throttle (50'), which connects the second pressure chamber (54') and the first pressure chamber (53') to each other.

3. Coordinate measuring device according to one of the preceding claims, wherein the fluid pressure bearing of the bearing assembly (59; 59') is a gas pressure bearing.

4. Coordinate measuring device according to one of Claims 1 to 3, wherein the coordinate measuring device additionally comprises a gas supply apparatus (41) which, in the case of a gas pressure spring according to Claim 1, is connected to the pressure chamber housing (34) or, in the case of a gas pressure spring according to Claim 2, is connected to the second pressure chamber housing (46').

5. Coordinate measuring device according to Claim 4, wherein the gas supply apparatus has a pressure regulator (39), via which a constant gas pressure is set.

6. Coordinate measuring device according to Claim 5, wherein the pressure regulator is an adjustable pressure regulator (39), on which the constant gas pressure can be set.

7. Coordinate measuring device according to Claim 4, 5 or 6 having a bearing assembly according to Claim 3, wherein the gas pressure bearing is likewise supplied with gas by the gas supply apparatus.

8. Coordinate measuring device according to one of the preceding Claims 1 to 7, wherein the gas is air.

## Revendications

1. Appareil de mesure de coordonnées présentant au moins un coulisseau de mesure (15, 3, 4) par lequel un capteur (5) de palpage de la surface d'une pièce (7) est monté à coulissement dans au moins une direction (x, y, z) de coordonnées par rapport à une pièce (7) placée sur un support (1) de pièce, le coulisseau de mesure (15, 3, 4) étant guidé à déplacement par rapport à un composant qui monte le coulisseau de mesure dans la direction (x, y, z) de coordonnées par l'intermédiaire d'un guide à palier fluide, ce guide à palier fluide comportant un guide plan (60, 63, 64, 67, 68) et un palier (31; 31') à fluide sous pression qui coopère avec le guide plan (60, 63, 64, 67, 68), le palier (31; 31') à fluide sous pression faisant partie d'un module de palier (59; 59') qui comporte en plus du palier (31; 31') à fluide sous pression une suspension (55; 55') dotée de deux parties s'appuyant élastiquement l'une sur l'autre, le palier (31; 31') à fluide sous pression étant fixé sur une première partie et sa deuxième partie étant fixée sur un corps de base de palier (21; 35; 57), le corps de base de palier (57) étant disposé sur le composant de montage (3) et le guide plan (67, 68) sur le coulisseau de mesure (4) ou le corps de base de palier (35; 57) étant disposé sur le coulisseau de mesure (15, 3) et le guide plan (60, 63, 64) sur le composant de montage (15, 18), la suspension étant une suspension à gaz comprimé, **caractérisé en ce que**
a) la suspension (55, 55') à gaz comprimé comporte :
un piston (32; 32') sur lequel est fixé le palier (31; 31') à fluide sous pression,
un boîtier (34; 34') de chambre sous pression,
une membrane déroulante (33; 33') qui relie l'un à l'autre le piston (32; 32') et le boîtier (34; 34') de chambre sous pression et qui monte le piston (32; 32') à déplacement par rapport au boîtier (34; 34') de chambre sous pression, le boîtier (34; 34') de chambre sous pression et la membrane déroulante (33; 33') formant une chambre (53; 53') sous pression et
b) le guide plan (60, 63, 64, 67, 68) est disposé sur un corps de guidage (18, 15, 4) de section transversale rectangulaire ou carrée, le corps de guidage (18, 15, 4) présentant sur son côté opposé au guide un autre guide (62, 65, 66, 69, 70), le corps de base de palier (21, 35, 57) entourant au moins en partie le corps de guidage (18, 15, 4) et au moins un autre palier (56) à fluide sous pression qui repose directement sur le corps de base de palier (21, 35, 57) est fixé en outre sur le corps de base de palier (21, 35, 57) au niveau de l'autre guide (62, 65, 66, 69, 70).

2. Appareil de mesure de coordonnées selon la revendication précédente, dans lequel la suspension (55') à gaz comprimé du module de palier (59; 59') comporte en outre un deuxième boîtier (46') de chambre sous pression et une deuxième membrane déroulante (47') qui relie l'un à l'autre le premier boîtier (34') de chambre sous pression et le deuxième boîtier (46') de chambre sous pression est prévue, le deuxième boîtier (46') de chambre sous pression et la deuxième membrane déroulante (47') formant une deuxième chambre (54') sous pression et le premier boîtier (34') de chambre sous pression présente un étranglement (50') qui relie l'une à l'autre la deuxième chambre (54') sous pression et la première chambre (53') sous pression.

3. Appareil de mesure de coordonnées selon l'une des revendications précédentes, dans lequel le palier à fluide sous pression du module de palier (59; 59') est un palier à gaz sous pression.

4. Appareil de mesure de coordonnées selon l'une des revendications 1 à 3, dans lequel l'appareil de mesure de coordonnées comporte en outre un dispositif (41) d'alimentation en gaz qui est relié au boîtier (34; 34') de chambre sous pression dans le cas d'une suspension à gaz comprimé selon la revendication 1 ou au deuxième boîtier (46') de chambre sous pression dans le cas d'une suspension à gaz comprimé selon la revendication 2.

5. Appareil de mesure de coordonnées selon la revendication 4, dans lequel le dispositif d'alimentation en gaz présente un régulateur de pression (39) qui permet d'établir une pression de gaz constante.

6. Appareil de mesure de coordonnées selon la revendication 5, dans lequel le régulateur de pression est un régulateur de pression (39) ajustable sur lequel la pression de gaz constante peut être établie.

7. Appareil de mesure de coordonnées selon les revendications 4, 5 ou 6, présentant un module de montage selon la revendication 3, dans lequel le palier à gaz sous pression est également alimenté en gaz par le dispositif d'alimentation en gaz.

8. Appareil de mesure de coordonnées selon l'une des revendications 1 à 7, dans lequel le gaz est l'air.
